# EUROPEAN PATENT APPLICATION

(11) **EP 2 060 591 A1**
(43) Date of publication of application: **20.05.2009**
(21) Application number: 07807370.7
(22) Date of filing: 14.09.2007
(51) Int. Cl.: C08G 18/00

(54) **URETHANE EMULSION**

(30) Priority: 14.09.2006 JP 2006249231
(71) Applicant: The Yokohama Rubber Co., Ltd., Minato-ku Tokyo 105-8685 (JP)
(72) Inventor: OKAMATSU, Takahiro, Hiratsuka City Kanagawa 254-8601 (JP); TAKAHARA, Hideyuki, Hiratsuka City Kanagawa 254-8601 (JP)
(74) Representative: Vossius & Partner
(86) International application number: PCT/JP2007/067966
(87) International publication number: WO 2008/032830

(57) **Abstract**

Disclosed is a urethane emulsion exhibiting excellent stability, whose cured product is excellent in water resistance. Specifically disclosed is a urethane emulsion obtained by stirring a urethane prepolymer composition containing a carboxylated urethane prepolymer, water and a neutralizing agent at a shear rate of 5,000 - 19,000 s⁻¹. The carboxylated urethane prepolymer is obtained by reacting a polyisocyanate compound having two or more isocyanate groups, a polyol compound having two or more hydroxy groups and a carboxylated compound having two or more hydroxy groups and one or more carboxy groups under such a condition that the molar ratio of the isocyanate group to the carboxy group is within the range of 12 - 200.

## Description

### Technical Field

The present invention relates to a urethane emulsion.

### Background Art

Technology for converting production lines which use solvent-based adhesives to the use of solventless adhesives has been developed in order to improve the work environment and as a measure against volatile organic compounds (VOC) emissions from finished products. A known example of such technology involves the use of aqueous polyurethane emulsions (aqueous polyurethane resins).
However, because aqueous polyurethane emulsions include as an essential ingredient an emulsifying agent, maintaining the water resistance has been a challenge.

To address this problem, Patent Document 1 discloses "a method of preparing an aqueous polyurethane-polyurea dispersion of excellent water resistance, comprising the steps of adding a mixture of water, a polyamine and, as a neutralizing agent, a base to a carboxylated terminal NCO-type urethane prepolymer obtained from an aromatic polyisocyanate, a polyhydroxy compound and a carboxyl group-containing compound so as to form an emulsion; and, following completion of the emulsion-forming reaction, reacting a compound containing at least two aziridinyl groups per molecule, wherein the neutralizing agent is used in an amount which is less than 80% mole equivalent of the carboxyl groups and at least 60 mol % of the polyamine is hydrazine."

Because the aziridinyl groups used in Patent Document 1 have toxicity, Patent Document 2 provides a method of introducing a crosslinked structure into a film by adding a crosslinking agent such as oxazoline or carbodiimide to an aqueous polyurethane resin and effecting a reaction with carboxy groups in the aqueous polyurethane resin.
Patent Document 1: JP 7-268055 A
Patent Document 2: JP 6-212081 A

### Disclosure of the Invention

### Problems to be Solved by the Invention

However, the inventors have discovered that, in the methods described in Patent Documents 1 and 2, when the drying time is short, the crosslinking reaction does not fully proceed, as a result of which a sufficient water resistance cannot be achieved. The inventors believe that the low water resistance of films obtained from such aqueous polyurethane emulsions is caused by the very large amount of emulsifying agent used to disperse the polyurethane at a small particle size during preparation of the emulsion.
However, simply reducing the amount of emulsifying agent during preparation of the emulsion will result in a loss of emulsion stability.

It is therefore an object of the present invention to provide a urethane emulsion which has an excellent stability and which forms a cured product of excellent water resistance.

### Means for Solving the Problems

The inventors have conducted extensive investigations in order to resolve the above problems. As a result, they have discovered that a urethane emulsion obtained by agitating, at a specific shear rate, a urethane prepolymer composition which includes a specific urethane prepolymer having carboxy groups, water, and a neutralizing agent has an excellent stability and forms a cured product of excellent water resistance. This discovery ultimately led to the present invention.
In the present specification, "water resistance" refers to the property of having poor solubility in water.

Specifically, the present invention provides the following (1) to (5).
(1) A urethane emulsion obtained by agitating, at a shear rate of between 5,000 and 19,000 s⁻¹, a urethane prepolymer composition comprising:
   a carboxylated urethane prepolymer obtained by reacting a polyisocyanate compound having at least two isocyanate groups, a polyol compound having at least two hydroxy groups, and a carboxy group-containing compound having at least two hydroxy groups and one or more carboxy groups at a molar ratio of the isocyanate groups to the carboxy groups of between 12 and 200;
   water; and
   a neutralizing agent.
(2) The urethane emulsion of (1) above, wherein the neutralizing agent is included in an amount that is equimolar with the carboxy groups, and which has a pH of between 7.0 and 8.0.
(3) The urethane emulsion of (1) or (2) above, wherein said agitation is carried out using a thin-film spin type agitator.
(4) The urethane emulsion of any one of (1) to (3) above, wherein the carboxylated urethane prepolymer, following said agitation, forms carboxylate-containing urethane prepolymer particles that have an average particle size of 25 µm or less and disperse in water.
(5) The urethane emulsion of (4) above, wherein the average particle size has a standard deviation of 10 µm or less.

### Advantages of the Invention

The urethane emulsion of the invention has an excellent stability and forms a cured product of excellent water resistance.

### Best Mode for Carrying Out the Invention

The invention is described more fully below.
First, the urethane emulsion of the invention is described.
The urethane emulsion of the invention is obtained by agitating, at a shear rate of between 5,000 and 19,000 s⁻¹, a urethane prepolymer composition which includes:
a carboxylated urethane prepolymer obtained by reacting a polyisocyanate compound having at least two isocyanate groups, a polyol compound having at least two hydroxy groups, and a carboxy group-containing compound having at least two hydroxy groups and one or more carboxy groups at a molar ratio of the isocyanate groups to the carboxy groups of between 12 and 200;
water; and
a neutralizing agent.

The carboxylated urethane prepolymer is described below.
The carboxylated urethane prepolymer included in the urethane prepolymer composition used when preparing the urethane emulsion of the invention is not subject to any particular limitation, provided it is obtained by reacting a polyisocyanate compound having at least two isocyanate groups, a polyol compound having at least two hydroxy groups, and a carboxy group-containing compound having at least two hydroxy groups and one or more carboxy groups, at a molar ratio of the isocyanate groups to the carboxy groups of between 12 and 200.

The polyisocyanate compound is described below.
The polyisocyanate compound used when preparing the carboxylated urethane prepolymer is not subject to any particular limitation, provided it has at least two isocyanate groups. Any such compound employed to prepare conventional polyurethane resins may be used. Illustrative examples include tolylene diisocyanates (TDI) such as 2,4-tolylene diisocyanate and 2,6-tolylene diisocyanate; diphenylmethane diisocyanates (MDI) such as diphenylmethane-4,4'-diisocyanate; tetramethylxylylene diisocyanate (TMXDI), trimethylhexamethylene diisocyanate (TMHMDI), 1,5-naphthalene diisocyanate, ethylene diisocyanate, propylene diisocyanate, tetramethylene diisocyanate, hexamethylene diisocyanates (HDI), isophorone diisocyanate (IPDI), xylylene diisocyanate (XDI), triphenylmethane triisocyanate, diisocyanates having a norbornane skeleton (NBDI), and modified products of any of the above such as isocyanurates.
Of these, TDI and MDI are preferred. These polyisocyanates are general-purpose polyisocyanates, and therefore are inexpensive and readily available.
The polyisocyanate compound may be used singly or as a combination of two or more thereof.

The polyol compound is now described.
The polyol compound used when preparing the carboxylated urethane prepolymer is not subject to any particular limitation, provided it has at least two hydroxy groups. Illustrative examples include the products obtained by addition polymerizing at least one alkylene oxide such as ethylene oxide, propylene oxide, butylene oxide or tetrahydrofuran with an active hydrogen-containing compound having at least two active hydrogens on the molecule.

The active hydrogen-containing compound is exemplified by polyhydric alcohols, amines, alkanolamines and polyhydric phenols.
Illustrative examples of polyhydric alcohols include ethylene glycol, propylene glycol, butanediol, diethylene glycol, glycerol, hexanetriol, trimethylolpropane and pentaerythritol.
Illustrative examples of amines include ethylenediamine and hexamethylenediamine.
Illustrative examples of alkanolamines include ethanolamine and propanolamine.
Illustrative examples of polyhydric phenols include resorcinol and bisphenols.

Illustrative examples of polyol compounds include polyether polyols such as polytetramethylene glycol, polyethylene glycol, polypropylene glycol, polyoxypropylene glycol and polyoxybutylene glycol; polyolefin polyols such as polybutadiene polyol and polyisoprene polyol; adipate polyols such as 1,6-hexanediol-adipate polyol; lactone polyols; and polyester polyols such as castor oil.

The polyol compound has a number-average molecular weight of preferably between about 500 and about 10,000, and more preferably between about 2,000 and about 6,000.
The polyol compound may be used singly or as a combination of two or more thereof.

Next, the carboxy group-containing compound is described.
The carboxy group-containing compound used when preparing the carboxylated urethane prepolymer is a compound having at least two hydroxy groups and one or more carboxy groups.
To better ensure the stability of the urethane emulsion and further enhance the water resistance of the cured product obtained therefrom, the number of carboxy groups on one molecule of the carboxy group-containing compound is preferably from 1 to 4, and more preferably 1 or 2.
To stably introduce the carboxy group-containing compound into the urethane emulsion, the number of hydroxy groups on one molecule of the carboxy group-containing compound is preferably 2 or 3, and more preferably 2.
Illustrative examples of the carboxy group-containing compound include dihydroxycarboxylic acids such as dimethylolbutanoic acid, dimethylolpropionic acid, dimethylolacetic acid, glyceric acid and tartaric acid.
Of these, dimethylolbutanoic acid is preferred because it can further improve the stability of the urethane emulsion.
The carboxy group-containing compound may be used alone or in combinations of two or more thereof.

In the present invention, the method of preparing the carboxylated urethane prepolymer is not subject to any particular limitation, provided it involves reacting a polyisocyanate compound having at least two isocyanate groups, a polyol compound having at least two hydroxy groups and a carboxy group-containing compound having at least two hydroxy groups and one or more carboxy groups, and provided the molar ratio of the isocyanate groups on the polyisocyanate compound to the carboxy groups on the carboxy group-containing compound (isocyanate groups/carboxy groups) is between 12 and 200.

During preparation of the carboxylated urethane prepolymer, the order in which the polyisocyanate compound, the polyol compound and the carboxy group-containing compound are added is not subject to any particular limitation. For example, these compounds may all be added at the same time, or any one of them may be added first. By way of illustration, preparation may be carried out in accordance with a conventional urethane prepolymer preparation process in which the polyisocyanate compound and the polyol compound are reacted to form a urethane prepolymer, following which the carboxy group-containing compound is added, then polymerization is carried out.

In the preparation of the carboxylated urethane prepolymer, the polyisocyanate compound and the carboxy group-containing compound are reacted at a molar ratio of the isocyanate groups on the polyisocyanate compound to the carboxy groups on the carboxy group-containing compound (isocyanate groups/carboxy groups) of between 12 and 200.
To ensure that the urethane emulsion has a higher emulsion stability and further enhance the water resistance of the cured product obtained therefrom, the molar ratio of the isocyanate groups on the polyisocyanate compound to the carboxy groups on the carboxy group-containing compound is preferably between 20 and 80, and more preferably between 40 and 80.

According to a preferred embodiment, the polyisocyanate compound, the polyol compound and the carboxy group-containing compound are used in respective amounts, based on the combined weight of the polyisocyanate compound, the polyol compound and the carboxy group-containing compound, of between 1 and 50 wt % (polyisocyanate compound), between 30 and 90 wt % (polyol compound), and between 0.1 and 20 wt % (carboxy group-containing compound).
By agitating a mixture of these compounds at between 60°C and 90°C for a period of between about 2 hours and about 8 hours, the carboxylated urethane prepolymer can be obtained.

Preparation of the carboxylated urethane prepolymer may be carried out, if necessary, in the presence of a urethane formation catalyst such as an organotin compound, an organobismuth compound or an amine. According to one preferred embodiment, such preparation is carried out in the presence of an organotin compound.
Illustrative examples of organotin compounds include stannous carboxylates such as stannous acetate, stannous octanoate, stannous laurate and stannous oleate; dialkyltin salts of carboxylic acids, such as dibutyltin acetate, dibutyltin dilaurate, dibutyltin maleate, dibutyltin di-2-ethylhexoate, dilauryltin diacetate and dioctyltin diacetate; trialkyltin hydroxides such as trimethyltin hydroxide, tributyltin hydroxide and trioctyltin hydroxide; dialkyltin oxides such as dibutyltin oxide, dioctyltin oxide and dilauryltin oxide; and dialkyltin chlorides such as dibutyltin dichloride and dioctyltin dichloride.
Of these, dibutyltin dilaurate, dibutyltin acetate and dibutyltin maleate are preferred because they are relatively inexpensive and easy to handle.
The urethane formation catalyst may be used singly or as a combination of two or more thereof.

In the resulting carboxylated urethane prepolymer, to ensure a higher urethane emulsion stability and further enhance the water resistance of the cured product obtained therefrom, the ratio of the sum of the number of urethane bonds and the number of moles of isocyanate groups to the number of moles of carboxy groups ((sum of number of urethane bonds and moles of isocyanate groups)/( moles of carboxy groups)) is preferably between 12 and 200, more preferably between 20 and 80, and even more preferably between 40 and 80.
The carboxylated urethane prepolymer has a weight-average molecular weight of preferably between 1,500 and 30,000, and more preferably between 3,000 and 20,000.
To ensure a higher urethane emulsion stability and further enhance the water resistance of the cured product obtained therefrom, it is preferable for the carboxylated urethane prepolymer to have an isocyanate group content (NCO %) of between 0.3 and 3%.
Here, "NCO %" refers to the weight percent of isocyanate groups based on the total weight of the urethane prepolymer.

The neutralizing agent is described below.
In the present invention, the neutralizing agent reacts with the carboxy groups on the carboxylated urethane prepolymer, converting the carboxy groups to a carboxylic acid salt, and is thus capable of rendering the carboxylated urethane prepolymer into a carboxylic acid salt-containing urethane prepolymer.
The neutralizing agent used to prepare the urethane emulsion of the invention is not subject to any particular limitation, provided it is capable of reacting with the carboxy groups. Illustrative examples include tertiary amines, ammonia, sodium hydroxide and potassium hydroxide.

Illustrative examples of tertiary amines include triethylamine, 2-(dimethylaminomethyl)phenol, 2,4,6-tris(dimethylaminomethyl)phenol and 1,8-diazabicyclo[5.4.0]-7-undecene.
Of these, triethylamine and ammonia are preferred because they readily volatilize during drying of the urethane emulsion.
The neutralizing agent may be used singly or as a combination of two or more thereof.

In the present invention, to further stabilize the urethane emulsion, the amount of the neutralizing agent, expressed as a molar ratio with respect to the carboxy groups on the carboxy group-containing compound (moles of neutralizing agent/carboxy groups on carboxy group-containing compound), is preferably between 1.0 and 1.3, and more preferably between 1.0 and 1.1.
When the amount of the neutralizing agent is equimolar with the carboxy groups on the carboxy group-containing compound, the pH of the urethane emulsion is preferably between 7.0 and 8.0, and more preferably between 7.0 and 7.5.

In the present invention, the amount of water is not subject to any particular limitation, provided it is an amount capable of dispersing the carboxylated urethane prepolymer.

In the urethane emulsion of the invention, the shear rate when agitating the urethane prepolymer composition is between 5,000 and 19,000 s⁻¹.
In order for the urethane emulsion obtained to have a small particle size and an average particle size distribution that is narrow and in order for the urethane emulsion to be more stable, the shear rate during agitation of the urethane prepolymer composition is preferably between 12,000 and 15,000 s⁻¹.

The agitating apparatus used when preparing the urethane emulsion of the invention may be, for example, a thin-film spin type agitator.
The thin-film spin type agitator is an agitating device that employs a thin-film spin method.
The thin-film spin method refers to a method of agitating a treatment liquid by placing the treatment liquid in a vessel and rotating an agitating element inside the treatment liquid. The agitating element, which has an end portion that reaches close to an inner peripheral surface of the vessel, is rotated at a high velocity within the treatment liquid, imparting rotational movement to the treatment liquid such that, by a centrifugal force, the treatment liquid presses up against the inside surface of the vessel and spins in the shape of a hollow cylindrical film.
According to this method, the treatment liquid receives the energy of the agitating element, causing the treatment liquid to spin at a high speed and, under a centrifugal force, to be pressed against the inner surface of the vessel so that the liquid spins in the shape of a hollow cylindrical film. However, the treatment liquid spins at a slower speed than the rotational velocity of the agitating element. As a result, the treatment liquid on the rotating surface of the agitating element incurs an agitating effect by the end portion of the agitating element, in addition to which an agitating effect associated with rotation of the flow of the treatment liquid also arises, thereby pulverizing the treatment liquid.

In order for the urethane emulsion obtained to have a small particle size and a narrow average particle size distribution and in order for the urethane emulsion to be more stable, the agitating device used for agitation is preferably a thin-film spin type agitator.
Examples of thin-film spin type agitators include those mentioned in JP 09-75698 A.
Illustrative examples of commercial thin-film spin type agitators include T.K. FILMICS 30-25, T.K. FILMICS 56-50 and T.K. FILMICS 80-50 (all manufactured by Primix Corporation).

It is preferable for the carboxylated urethane prepolymer, following neutralization of the carboxy groups with the neutralizing agent and agitation, to form particles of a carboxylic acid salt-containing urethane prepolymer which are dispersed in water.
The carboxylic acid salt-containing urethane prepolymer is sometimes referred to below as a "carboxylate-containing urethane prepolymer."

In the urethane emulsion of the invention, the carboxylic acid salt within the carboxylate-containing urethane prepolymer is not subject to any particular limitation, provided it dissociates in water to form carboxylate ions (-COO⁻).
The cations which form a salt with the carboxylate ions are not subject to any particular limitation, provided they are cations generated by the neutralizing agent. Illustrative examples include alkali metal ions such as sodium ions and potassium ions, and nitrogen atom-containing ions such as ammonium ions and quaternary ammonium ions.

To achieve a better urethane emulsion stability and further enhance the water resistance of the cured product obtained therefrom, the ratio of the sum of the number of urethane bonds (-NH-CO-O-) and the number of moles of isocyanate groups to the number of moles of carboxylic acid salt ((sum of number of urethane bonds and moles of isocyanate groups)/(moles of carboxylic acid salt)) within the carbcxylate-containing urethane prepolymer is preferably between 12 and 200, more preferably between 12 and 80, even more preferably between 20 and 80, and most preferably between 40 and 80.
In the present invention, the number of moles of the carboxylic acid salt within the carboxylate-containing urethane prepolymer is synonymous with the number of moles of carboxy groups in the carboxylated urethane prepolymer. In the event that all the carboxy groups are not neutralized by the neutralizing agent, the number of moles of the carboxylic acid salt shall be the value obtained by adding the number of moles of unneutralized carboxy groups to the number of moles of the carboxylic acid salt (i.e., the number of moles of carboxy groups on the carboxylated urethane prepolymer).

For the total surface area of the carboxylate-containing urethane prepolymer particles to be larger and to achieve an even better water resistance in the resulting cured product, the average particle size of the carboxylate-containing urethane prepolymer particles is preferably 25 µm or less, more preferably between 0.1 and 1 µm, and even more preferably between 0.1 and 0.5 µm.
In the present invention, the average particle size of the particles is measured using a Microtrac particle size analyzer (Nikkiso Co., Ltd.).

From the standpoint of particle size uniformity, the average particle size has a standard deviation of preferably 10 µm or less, more preferably between 0.05 and 6 µm, even more preferably between 0.1 and 1 µm, and most preferably between 0.1 and 0.6 µm.
Moreover, from the standpoint of better urethane emulsion stability, the urethane emulsion has a pH of preferably between 7.0 and 8.0, more preferably between 7.0 and 7.8, and even more preferably between 7.4 and 7.8.

In addition to the carboxylated urethane prepolymer, the neutralizing agent and water, if necessary, other ingredients such as a viscosity modifier and a chain extender may also be used during preparation of the inventive urethane emulsion.

Viscosity modifiers that may be used during preparation of the inventive urethane emulsion include organic solvents which are compatible with water, such as ethyl acetate, acetone and methyl ethyl ketone.
Use may be made of a single viscosity modifier or a combination of two or more viscosity modifiers.

To curb thickening of the carboxylated urethane prepolymer and increase dispersibility during emulsification, the amount of viscosity modifier used per 100 parts by weight of the carboxylated urethane prepolymer is preferably between 50 and 300 parts by weight, and more preferably between 50 and 150 parts by weight.

Chain extenders that may be used when preparing the urethane emulsion of the invention are not subject to any particular limitation, provided they are ones that can generally be used in urethane emulsions. Illustrative examples include aliphatic diamines such as ethylenediamine, propylenediamine, hexamethylenediamine and triethylenetetramine; alicyclic diamines such as isophoronediamine and piperazine; aromatic diamines such as diphenyldiamine; and triamines.

From the standpoint of increasing the molecular weight and obtaining an emulsion of polymer particles, the amount of chain extender used per 100 parts by weight of the carboxylated urethane prepolymer is preferably between 5 and 20 parts by weight, and more preferably between 5 and 10 parts by weight.

The urethane emulsion of the invention may also include, if necessary, a crosslinking agent and/or additive having two or more groups of at least one type selected from among oxazoline, carbodiimide and aziridine groups.

Crosslinking agents that may be included in the urethane emulsion of the invention are not subject to any particular limitation, provided they are compounds having two or more groups of at least one type selected from among oxazoline, carbodiimide and aziridine groups. For example, an aqueous resin and/or emulsion thereof having on the molecule two or more groups of at least one type selected from among oxazoline, carbodiimide and aziridine groups is preferred on account of its excellent compatibility with the urethane emulsion. Such crosslinking agents may be used singly or as combinations of two or more thereof.
Of the above, a crosslinking agent having two or more oxazoline groups is preferred for reaction with the carboxy groups at relatively low temperatures.

The aqueous resin is an aqueous resin (polymer) having on the molecule two or more groups of at least one type selected from among oxazoline, carbodiimide and aziridine groups. The aqueous resin preferably has an acrylic main chain.
The aqueous resin may be used after dissolution beforehand in a suitable solvent. Preferred examples of the solvent include water and 1-methoxy-2-propanol. The solids content at this time is preferably between 5 and 30 wt %.

The aqueous resin may be prepared by a known method, or a commercial product may be used.
Examples of commercial products include oxazoline group-containing crosslinking agents such as EPOCROS WS-500 and EPOCROS WS-700 (both available from Nippon Shokubai Co., Ltd.), and carbodiimide group-containing crosslinking agents such as Carbodilite V-02, Carbodilite V-02-L2 and Carbodilite V-04 (all available from Nisshinbo Industries, Inc.).

The emulsion is an emulsion having on the molecule two or more groups of at least one type of group selected from among oxazoline, carbodiimide and aziridine groups. The resin ingredient included in the emulsion preferably has an acrylic main chain.
The emulsion preferably has a solids content of between 10 and 60 wt %.

The emulsion may be prepared by a known method, or a commercial product may be used.
Examples of commercial products include oxazoline group-containing crosslinking agents such as EPOCROS K-1010E, EPOCROS K-1020E, EPOCROS K-1030E, EPOCROS K-2010E, EPOCROS K-2020E and EPOCROS K-2030E (all available from Nippon Shokubai Co., Ltd.).

Examples of other commercial products that may be used include aziridine group-containing crosslinking agents such as XAMA-2 and XAMA-7 (both available from EIT, Inc.), and PFAZ-322 (available from Sybron Chemicals Inc.); and carbodiimide group-containing crosslinking agents such as UCARLNK Croslinker XL-29SE (available from Union Carbide), and Carbodilite E-01 and Carbodilite E-02 (both available from Nisshinbo Industries, Inc.).

The amount of crosslinking agent, expressed as the molar ratio of the carboxylate present in the carboxylate-containing urethane prepolymer to the sum of the oxazoline groups, carbodiimide groups and aziridine groups present in the crosslinking agent, is preferably between 1.0/0.5 and 1.0/2.0, more preferably between 1.0/0.5 and 1.0/1.5, and even more preferably between 1.0/0.8 and 1.0/1.2. At a molar ratio within the above range, the film hardness-enhancing effect by crosslinking is large, enabling a cured product having an excellent water resistance to be obtained. In addition, the storage stability is also excellent.
The crosslinking agent may react with the carboxylate-containing urethane prepolymer present in the urethane emulsion.

Additives that may be included in the urethane emulsion of the invention are exemplified by fillers, antidegradants, antioxidants, pigments (dyes), plasticizers, thixotropic agents, ultraviolet absorbers, flame retardants, surfactants (including leveling agents), dispersants, dehydrating agents, tackifiers and antistatic agents.

The fillers are exemplified by organic and inorganic fillers in various forms. Illustrative examples include fumed silica, fired silica, precipitated silica, pulverized silica and fused silica; diatomaceous earth; iron oxide, zinc oxide, titanium oxide, barium oxide and magnesium oxide; calcium carbonate, magnesium carbonate and zinc carbonate; pyrophyllite clay, kaolin clay and fired clay; carbon black; and also fatty acid-treated, resin acid-treated, urethane compound-treated or fatty acid ester-treated products of any of the above.

The antidegradant is exemplified by hindered phenol-type compounds.
The antioxidant is exemplified by butylhydroxytoluene (BHT) and butylhydroxyanisole (BHA).

Examples of suitable pigments include inorganic pigments such as titanium oxide, zinc oxide, ultramarine, red iron oxide, lithopone, lead, cadmium, iron, cobalt, aluminum, hydrochlorides and sulfates; and organic pigments such as azo pigments, phthalocyanine pigments, quinacridone pigments, quinacridonequinone pigments, dioxazine pigments, anthrapyrimidine pigments, an than throne pigments, indanthrone pigments, flavanthrone pigments, perylene pigments, perinone pigments, diketopyrrolopyrrole pigments, quinonaphthalone pigments, anthraquinone pigments, thioindigo pigments, benzimidazolone pigments, isoindoline pigments and carbon black.

Examples of suitable plasticizers include diisononyl phthalate (DINP); dioctyl adipate and isodecyl succinate; diethylene glycol dibenzoate and pentaerythritol ester; butyl oleate and methyl acetylricinoleate; tricresyl phosphate and trioctyl phosphate; and poly(propylene glycol adipate) and poly(butylene glycol adipate).

Examples of suitable thixotropic agents include AEROSIL (available from Nippon Aerosil Co., Ltd.), and DISPARLON (available from Kusumoto Chemicals, Ltd.).
Examples of suitable tackifiers include terpene resins, phenolic resins, terpene-phenolic resins, rosin resins and xylene resins.

Examples of suitable flame retardants include chloroalkyl phosphates, dimethyl methylphosphonate, bromine-phosphorus compounds, ammonium polyphosphate, neopentylbromide-polyethers and brominated polyethers.
Examples of suitable antistatic agents generally include quaternary ammonium salts; and hydrophilic compounds such as polyglycols and ethylene oxide derivatives.

In cases where the urethane emulsion of the invention includes a crosslinking agent and/or an additive, the method of preparation is not subject to any particular limitation. For example, preparation may be carried out by thoroughly working together the urethane emulsion of the invention and the crosslinking agent and/or additive using an agitator such as a mixer. Alternatively, the crosslinking agent and/or additive may be added to the carboxylated urethane prepolymer, neutralizing agent and water at the time the urethane emulsion of the invention is prepared.

The urethane emulsion of the invention may be employed as either a one-part or a two-part composition.
When employed as a one-part composition, because there is no need to mix the base resin and the curing agent (crosslinking agent) on site, the composition has an excellent ease of use.
In a preferred embodiment, the urethane emulsion of the invention is used as a one-part composition on account of the excellent stability.

No particular limitation is imposed on curing of the urethane emulsion of the invention. For example, by heating the urethane emulsion at between about 60°C and about 150°C for a period of 1 to 6 hours, a film can be formed, enabling a cured product of excellent water resistance to be obtained.

Applications for the urethane emulsion of the invention include adhesives, coatings, sealants, encapsulants and potting agents.

It has hitherto been the practice, in preparing an emulsion containing an inorganic compound and an oil, to apply a high stirring rate and use a large amount of emulsifying agent in order to reduce the particle size in the emulsion.
By contrast, in a polymer emulsion, the polymer has a relatively small amount of emulsifying ingredient compared with emulsions of an inorganic compound and an oil. As a result, it had been thought that, when an emulsion is prepared using a polymer, applying strong shear to the starting material will destroy the emulsion.
However, the inventors have discovered that, contrary to the common practice thus far, a urethane emulsion can be prepared by applying a high shear rate to a urethane prepolymer composition.
Moreover, the inventors have found that the resulting urethane emulsion has an excellent stability, a small average particle size, and a sharp average particle size distribution.
Generally, when the average particle size of the urethane prepolymer in such a urethane emulsion is small, that is, when the surface area of the urethane prepolymer particles is larger, the amount of emulsifying ingredient within the system must be increased to stabilize the emulsion.
However, the inventors have found that, in a urethane emulsion obtained by applying a high shear rate, although the urethane prepolymer in the emulsion has a small average particle size, the urethane emulsion has an excellent stability.
Here, the inventors, having noticed that the urethane emulsion has an outstanding stability even though the urethane prepolymer in the urethane emulsion has a small average particle size, discovered that the urethane emulsion has an excellent stability even when the amount of carboxy groups serving as the emulsifying ingredient is lowered, and moreover found that lowering the amount of carboxy groups enables the urethane emulsion to form a cured product having an excellent water resistance. These discoveries ultimately led to the present invention.

The reasons why the urethane emulsion of the present invention has an excellent stability appear to be corroborated in the working examples of the invention.
That is, urethane emulsions to which only a low shear rate had been imparted during preparation, as in Comparative Examples 6 to 12, had a pH higher than 8.0 in spite of the addition of a neutralizing agent in an amount equimolar with the carboxy groups.
This indicates that few -COO⁻ ions are present at the surface of the urethane prepolymer particles in the urethane emulsions of Comparative Examples 6 to 12, and that the carboxy groups do not all function as an active ingredient for emulsification in the urethane emulsions of Comparative Examples 6 to 12. It is for this reason that the urethane emulsions of Comparative Examples 6 to 12 appear to have a poor stability.
By contrast, the urethane emulsions of Example 1 to 7 according to the invention had a substantially neutral pH of between 7.0 and 7.5.
This is thought to be because substantially all -COO⁻ ions are present at the surface of the urethane prepolymer particles in the urethane emulsions of Examples 1 to 7.
Moreover, in each of the urethane emulsions in Examples 1 to 7, even though the amount of carboxy groups relative to the isocyanate groups is low, by setting the shear rate to between 5,000 and 19,000 s⁻¹ during preparation of the urethane emulsion, substantially all of the carboxy groups can be made present on the surface of the urethane prepolymer particles. These carboxy groups presumably become -COO⁻ ions, and serve as an active ingredient for emulsifying the urethane prepolymer.
Hence, the urethane emulsion of the invention, because substantially all the -COO⁻ ions are present at the surface of urethane prepolymer particles, has an excellent stability in spite of the small amount of carboxylic acid salt.

Next, the excellent water resistance of the cured product obtained from the urethane emulsion of the invention is explained.
Each of the films obtained from the urethane emulsions of Comparative Examples 1, 2, 4 and 5 using carboxylated urethane prepolymers obtained by reaction at a molar ratio of isocyanate groups to carboxy groups of less than 12 ended up whitening after the water resistance test, and thus had a poor water resistance.
By contrast, each of the films obtained from urethane emulsions in the Examples of the invention did not whiten following the water resistance test, and thus had an excellent water resistance.
The reason is as follows: because each of the urethane emulsions of the invention was prepared by agitation at a high shear rate, the carboxylate-containing urethane prepolymer had a smaller average particle size and a larger particle surface area than when prepared at a low shear rate.
Hence, in the present invention, the number of carboxylate ions per unit surface area on the particles of carboxylate-containing urethane prepolymer is smaller. As a result, when the urethane emulsion of the invention is rendered into a film, the inventors presume that few of the carboxylate ions are present on potential moisture infiltration pathways (e.g., fusion surfaces between the carboxylate-containing urethane prepolymer particles), thus giving a cured product having an excellent water resistance.

### Examples

Examples of the invention are given below by way of illustration, and not by way of limitation.

### 1. Measurements

Using the urethane emulsion obtained, the stability, water resistance, pH, and average particle size and standard deviation thereof were determined by the methods described below. The results are shown in Tables 1 and 2.

### (1) Stability

The urethane emulsion obtained was placed in a container and hermetically sealed, the container was held at 50°C for 3 weeks, and the condition of the urethane emulsion after 3 weeks was visually examined.
Cases in which the urethane emulsion was uniformly dispersed are denoted in the tables as "Good." Cases in which the urethane emulsion had separated are denoted as "NG."

### (2) pH

The pH of the urethane emulsion obtained was measured with a pH meter.

### (3) Average Particle Size and Standard Deviation Thereof

The average particle size and standard deviation thereof for the urethane emulsion obtained were measured using a Microtrac particle size analyzer (Nikkiso Co., Ltd.).

### (4) Water Resistance

Each urethane emulsion, in an amount of 10 grams taken immediately after preparation of the emulsion, was dried at 80°C for one hour, then formed into a sheet-like film having a length of 100 mm, a width of 100 mm and a thickness of about 0.4 mm, giving a test piece.
This test piece was immersed in 50°C water for 24 hours, following which the condition of the test piece in water was visually examined and the water resistance was rated.
Cases in which there was no change in appearance compared with before immersion are denoted as "Good." Cases in which the film whitened are denoted as "NG."

### 2. Synthesis of Carboxylated Urethane Prepolymer

A polyisocyanate compound, a polyol compound and a carboxy group-containing compound or carboxy group-containing compound 2 were charged into an agitator in the amounts (moles) shown in Table 1 or Table 2 below and reacted under a stream of nitrogen at 70°C for 6 hours, thereby synthesizing a carboxylated urethane prepolymer.
The resulting carboxylated urethane prepolymer had a molecular weight of 6,000 to 7,000.

### 3. Preparation of Urethane Emulsion

Next, the resulting carboxylated urethane prepolymer (in an unisolated state following synthesis) was dissolved in a viscosity modifier, then charged, together with water, a neutralizing agent and a chain extender, into a thin-film spin type agitator (manufactured by Prymix Corporation under the trade name T.K. FILMICS 80-50) and dispersed by one hour of agitation at 10°C, thereby forming a urethane emulsion.
The respective amounts of the viscosity modifier, water, neutralizing agent and chain extender, and the solids contents (wt %)--which excludes the viscosity modifier and the water--of each urethane emulsion obtained are shown in Tables 1 and 2 below.
In Tables 1 and 2, "Isocyanate groups/Carboxy groups" denotes, in connection with the polyisocyanate compound and the carboxy group-containing compound used when synthesizing the carboxylated urethane prepolymer, the molar ratio (isocyanate groups/carboxy groups) of the isocyanate groups in the polyisocyanate compound to the carboxy groups in the carboxy group-containing compound.

**[Table 1]**

| Table 1 (part 1) | | | | | | | |
|---|---|---|---|---|---|---|---|
| | Comp. Ex. | | Examples | | | | CE |
| | 1 | 2 | 1 | 2 | 3 | 4 | 3 |
| Polyisocyanate compound (moles) | 2 | 2 | 2 | 2 | 2 | 2 | 2 |
| (moles of isocyanate groups) | (4) | (4) | (4) | (4) | (4) | (4) | (4) |
| Polyol compound (moles) | 0.7 | 0.7 | 0.7 | 0.7 | 0.7 | 0.7 | 0.7 |
| (moles of hydroxy groups) | (1.4) | (1.4) | (1.4) | (1.4) | (1.4) | (1.4) | (1.4) |
| Carboxy group-containing compound (moles) | 0.6 | 0.4 | 0.3 | 0.2 | 0.1 | 0.05 | 0.01 |
| (moles of carboxy groups) | (0.6) | (0.4) | (0.3) | (0.2) | (0.1) | (0.05) | (0.01) |
| Neutralizing agent (moles) | 0.6 | 0.4 | 0.3 | 0.2 | 0.1 | 0.05 | 0.01 |
| (moles of alkaline functional groups) | (0.6) | (0.4) | (0.3) | (0.2) | (0.1) | (0.05) | (0.01) |
| Chain extender (moles) | 0.4 | 0.4 | 0.4 | 0.4 | 0.4 | 0.4 | 0.4 |
| Viscosity modifier (g) | 45 | 45 | 45 | 45 | 45 | 45 | 45 |
| Water (g) | 55 | 55 | 55 | 55 | 55 | 55 | 55 |
| Isocyanate groups/Carboxy groups | 7 | 10 | 13 | 20 | 40 | 80 | 400 |
| Solids content (wt %) | 35 | 35 | 35 | 35 | 35 | 35 | 35 |
| Shear rate (s⁻¹; | 15,000 | 15,000 | 15,000 | 15,000 | 15,000 | 15,000 | 15,000 |
| Water resistance | NG | NG | good | good | good | good | good |
| Stability | good | good | good | good | good | good | NG |
| pH | 7.3 | 7.2 | 7.2 | 7.2 | 7.2 | 7.2 | 7.2 |
| Average particle size (µm) | 0.25 | 0.20 | 0.18 | 0.15 | 0.18 | 0.18 | 0.25 |
| Standard deviation (µm) | 0.06 | 0.04 | 0.03 | 0.03 | 0.03 | 0.03 | 0.05 |

**[Table 2]**

| Table 1 (part 2) | | | | | | | |
|---|---|---|---|---|---|---|---|
| | Comparative Examples | | | | | | |
| | 4 | 5 | 6 | 7 | 8 | 9 | 10 |
| Polyisocyanate compound (moles) | 2 | 2 | 2 | 2 | 2 | 2 | 2 |
| (moles of isocyanate groups) | (4) | (4) | (4) | (4) | (4) | (4) | (4) |
| Polyol compound (moles) | 0.7 | 0.7 | 0.7 | 0.7 | 0.7 | 0.7 | 0.7 |
| (moles of hydroxy groups) | (1.4) | (1.4) | (1.4) | (1.4) | (1.4) | (1.4) | (1.4) |
| Carboxy group-containing compound (moles) | 0.6 | 0.4 | 0.3 | 0.2 | 0.1 | 0.05 | 0.01 |
| (moles of carboxy groups) | (0.6) | (0.4) | (0.3) | (0.2) | (0.1) | (0.05) | (0.01) |
| Neutralizing agent (moles) | 0.6 | 0.4 | 0.3 | 0.2 | 0.1 | 0.05 | 0.01 |
| (moles of alkaline functional groups) | (0.6) | (0.4) | (0.3) | (0.2) | (0.1) | (0.05) | (0.01) |
| Chain extender (moles) | 0.4 | 0.4 | 0.4 | 0.4 | 0.4 | 0.4 | 0.4 |
| Viscosity modifier (g) | 45 | 45 | 45 | 45 | 45 | 45 | 45 |
| Water (g) | 55 | 55 | 55 | 55 | 55 | 55 | 55 |
| Isocyanate groups/Carboxy groups | 7 | 10 | 13 | 20 | 40 | 80 | 400 |
| Solids content (wt %) | 35 | 35 | 35 | 35 | 35 | 35 | 35 |
| Shear rate (s⁻¹) | 1,200 | 1,200 | 1,200 | 1,200 | 1, 200 | 1,200 | 1, 200 |
| Water resistance | NG | NG | good | good | good | good | good |
| Stability | good | good | NG | NG | NG | NG | NG |
| pH | 8.4 | 8.3 | 8.3 | 8.5 | 8.5 | 8.4 | 8.2 |
| Average particle size (µm) | 40 | 35 | 35 | 50 | 50 | 50 | 60 |
| Standard deviation (µm) | 30 | 25 | 25 | 40 | 40 | 40 | 50 |

**[Table 3]**

| Table 1 (part 3) | | | | | | |
|---|---|---|---|---|---|---|
| | Comp. Ex. | | Examples | | | CE |
| | 11 | 12 | 5 | 6 | 7 | 13 |
| Polyisocyanate compound (moles) | 2 | 2 | 2 | 2 | 2 | 2 |
| (moles of isocyanate groups) | (4) | (4) | (4) | (4) | (4) | (4) |
| Polyol compound (moles) | 0.7 | 0.7 | 0.7 | 0.7 | 0.7 | 0.7 |
| (moles of hydroxy groups) | (1.4) | (1.4) | (1.4) | (1.4) | (1.4) | (1.4) |
| Carboxy group-containing compound (moles) | 0.05 | 0.05 | 0.05 | 0.05 | 0.05 | 0.05 |
| (moles of carboxy groups) | (0.05) | (0.05) | (0.05) | (0.05) | (0.05) | (0.05) |
| Neutralizing agent (moles) | 0.05 | 0.05 | 0.05 | 0.05 | 0.05 | 0.05 |
| (moles of alkaline functional groups) | (0.05) | (0.05) | (0.05) | (0.05) | (0.05) | (0.05) |
| Chain extender (moles) | 0.4 | 0.4 | 0.4 | 0.4 | 0.4 | 0.4 |
| Viscosity modifier (g) | 45 | 45 | 45 | 45 | 45 | 45 |
| Water (g) | 55 | 55 | 55 | 55 | 55 | 55 |
| Isocyanate groups/Carboxy groups | 80 | 80 | 80 | 80 | 80 | 80 |
| Solids content (wt %) | 35 | 35 | 35 | 35 | 35 | 35 |
| Shear rate (s⁻¹) | 2,400 | 4,800 | 7,200 | 9,600 | 12,000 | 20,000 |
| Water resistance | good | good | good | good | good | NG |
| Stability | NG | NG | good | good | good | NG |
| pH | 8.4 | 8.4 | 7.8 | 7.6 | 7.5 | 8.4 |
| Average particle size (µm) | 30 | 30 | 20 | 1.0 | 0.4 | 2.0 |
| Standard deviation (µm) | 40 | 20 | 6.0 | 0.6 | 0.09 | 3.0 |

Details are given below on each of the ingredients shown in Table 1.
Polyisocyanate compound: TDI (Cosmonate TDI100, available from Mitsui Takeda Chemicals, Inc.)
Polyol compound: 1,6-Hexanediol-adipate polyol (N-164; number-average molecular weight, 1,000; available from Nippon Polyurethane Industry Co., Ltd.)
Carboxy group-containing compound: Dimethylolbutanoic acid (Nippon Kasei Chemical Co., Ltd.)
Neutralizing agent: Triethylamine (Kanto Chemical Co., Inc.)
Chain extender: Piperazine hexahydrate (Nippon Nyukazai Co., Ltd.)
Viscosity modifier: Methyl ethyl ketone (Kanto Chemical Co., Inc.)

As is apparent from the results shown in Table 1, each of the urethane emulsions prepared in Comparative Examples 1, 2, 4 and 5, which contained a carboxylated urethane prepolymer obtained by reaction at a molar ratio of isocyanate groups to carboxy groups of less than 12, had a poor water resistance.
Each of the urethane emulsions prepared in Comparative Examples 3 and 10, which contained a carboxylated urethane prepolymer obtained by reaction at a molar ratio of isocyanate groups to carboxy groups of more than 200, had a poor stability.
Each of the urethane emulsions prepared in Comparative Examples 6 to 12 at a shear rate of less than 5,000 s⁻¹ had a poor stability. The urethane emulsion prepared in Comparative Example 13 at a shear rate of more than 19,000 had a poor water resistance and a poor stability.
By contrast, each of the urethane emulsions according to the present invention (Examples 1 to 7) had an excellent stability and resulted in a cured product of excellent water resistance.

**[Table 4]**

| Table 2 (part 1) | | | | | | | |
|---|---|---|---|---|---|---|---|
| | CE | Examples | | Comparative Examples | | | |
| | 14 | 8 | 9 | 15 | 16 | 17 | 18 |
| Polyisocyanate compound (moles) | 2 | 2 | 2 | 2 | 2 | 2 | 2 |
| (moles of isocyanate groups) | (4) | (4) | (4) | (4) | (4) | (4) | (4) |
| Polyol compound (moles) | 0.7 | 0.7 | 0.7 | 0.7 | 0.7 | 0.7 | 0.7 |
| (moles of hydroxy groups) | (1.4) | (1.4) | (1.4) | (1.4) | (1.4) | (1.4) | (1.4) |
| Carboxy group-containing compound 2 (moles) | 0.4 | 0.3 | 0.1 | 0.01 | 0.6 | 0.4 | 0.3 |
| (moles of carboxy groups) | (0.4) | (0.3) | (0.1) | (0.01) | (0.6) | (0.4) | (0.3) |
| Neutralizing agent (moles) | 0.4 | 0.3 | 0.1 | 0.01 | 0.6 | 0.4 | 0.3 |
| (moles of alkaline functional groups) | (0.4) | (0.3) | (0.1) | (0.01) | (0.6) | (0.4) | (0.3) |
| Chain extender (moles) | 0.4 | 0.4 | 0.4 | 0.4 | 0.4 | 0.4 | 0.4 |
| Viscosity modifier (g) | 45 | 45 | 45 | 45 | 45 | 45 | 45 |
| Water (g) | 55 | 55 | 55 | 55 | 55 | 55 | 55 |
| Isocyanate groups/Carboxy groups | 10 | 13 | 40 | 400 | 7 | 10 | 13 |
| Solids content (wt %) | 35 | 35 | 35 | 35 | 35 | 35 | 35 |
| Shear rate (s⁻¹) | 15,000 | 15,000 | 15,000 | 15,000 | 1,200 | 1,200 | 1,200 |
| Water resistance | NG | good | good | good | NG | NG | good |
| Stability | good | good | good | NG | good | good | NG |
| pH | 8.2 | 8.1 | 8.1 | 8.3 | 8.6 | 8.4 | 8.2 |
| Average particle size (µm) | 0.23 | 0.18 | 0.19 | 0.28 | 45 | 40 | 40 |
| Standard deviation (µm) | 0.05 | 0.04 | 0.04 | 0.07 | 33 | 28 | 25 |

**[Table 5]**

| Table 2 (part 2) | | | | | | |
|---|---|---|---|---|---|---|
| | Comp. Ex. | | | Examples | | CE |
| | 19 | 20 | 21 | 10 | 11 | 22 |
| Polyisocyanate compound (moles) | 2 | 2 | 2 | 2 | 2 | 2 |
| (moles of isocyanate groups) | (4) | (4) | (4) | (4) | (4) | (4) |
| Polyol compound (moles) | 0.7 | 0.7 | 0.7 | 0.7 | 0.7 | 0.7 |
| (moles of hydroxy groups) | (1.4) | (1.4) | (1.4) | (1.4) | (1.4) | (1.4) |
| Carboxy group-containing compound 2 (moles) | 0.1 | 0.05 | 0.05 | 0.05 | 0.05 | 0.05 |
| (moles of carboxy groups) | (0.1) | (0.05) | (0.05) | (0.05) | (0.05) | (0.05) |
| Neutralizing agent (moles) | 0.1 | 0.05 | 0.05 | 0.05 | 0.05 | 0.05 |
| (moles of alkaline functional groups) | (0.1) | (0.05) | (0.05) | (0.05) | (0.05) | (0.05) |
| Chain extender (moles) | 0.4 | 0.4 | 0.4 | 0.4 | 0.4 | 0.4 |
| Viscosity modifier (g) | 45 | 45 | 45 | 45 | 45 | 45 |
| Water (g) | 55 | 55 | 55 | 55 | 55 | 45 |
| Isocyanate groups/Carboxy groups | 40 | 80 | 80 | 80 | 80 | 80 |
| Solids content (wt %) | 35 | 35 | 35 | 35 | 35 | 35 |
| Shear rate (s⁻¹) | 1,200 | 1,200 | 4,800 | 7,200 | 12,000 | 20,000 |
| Water resistance | good | good | good | good | good | NG |
| Stability | NG | NG | NG | good | good | NG |
| pH | 8.6 | 8.2 | 8.1 | 8.5 | 8.3 | 8.0 |
| Average particle size (µm) | 55 | 51 | 33 | 0.18 | 0.3 | 12 |
| Standard deviation (µm) | 35 | 42 | 31 | 0.5 | 0.07 | 20 |

Details are given below on each of the ingredients shown in Table 2.
Polyisocyanate compound: TDI (Cosmonate TDI100, available from Mitsui Takeda Chemicals, Inc.)
Polyol compound: 1,6-Hexanediol adipate polyol (N-164; number-average molecular weight, 1,000; available from Nippon Polyurethane Industry Co., Ltd.)
Carboxy group-containing compound 2: Dimethylolpropionic acid (Nippon Kasei Chemical Co., Ltd.)
Neutralizing agent: Triethylamine (Kanto Chemical Co., Inc.)
Chain extender: Piperazine hexahydrate (Nippon Nyukazai Co., Ltd.)
Viscosity modifier: Methyl ethyl ketone (Kanto Chemical Co., Inc.)

As is apparent from the results shown in Table 2, each of the urethane emulsions prepared in Comparative Examples 14, 16 and 17, which contained a carboxylated urethane prepolymer obtained by reaction at a molar ratio of isocyanate groups to carboxy groups of less than 12, had a poor water resistance.
The urethane emulsion prepared in Comparative Example 15, which contained a carboxylated urethane prepolymer obtained by reaction at a molar ratio of isocyanate groups to carboxy groups of more than 200, had a poor stability.
Each of the urethane emulsions prepared in Comparative Examples 18 to 21 at a shear rate of less than 5,000 s⁻¹ had a poor stability. The urethane emulsion prepared in Comparative Example 22 at a shear rate of more than 19,000 had a poor water resistance and a poor stability.
By contrast, each of the urethane emulsions according to the present invention (Examples 8 to 11) had an excellent stability and resulted in a cured product of excellent water resistance.

### Industrial Applicability

The urethane emulsions of the invention have an excellent stability and form cured products of excellent water resistance.

## Claims

1. A urethane emulsion obtained by agitating, at a shear rate of between 5,000 and 19,000 s⁻¹, a urethane prepolymer composition comprising:
a carboxylated urethane prepolymer obtained by reacting a polyisocyanate compound having at least two isocyanate groups, a polyol compound having at least two hydroxy groups, and a carboxy group-containing compound having at least two hydroxy groups and one or more carboxy groups at a molar ratio of the isocyanate groups to the carboxy groups of between 12 and 200;
water; and
a neutralizing agent.

2. The urethane emulsion of claim 1, wherein the neutralizing agent is included in an amount that is equimolar with the carboxy groups, and which has a pH of between 7.0 and 8.0.

3. The urethane emulsion of claim 1 or 2, wherein said agitation is carried out using a thin-film spin type agitator.

4. The urethane emulsion of any one of claims 1 to 3, wherein the carboxylated urethane prepolymer, following said agitation, forms carboxylate-containing urethane prepolymer particles that have an average particle size of 25 µm or less and disperse in water.

5. The urethane emulsion of claim 4, wherein the average particle size has a standard deviation of 10 µm or less.
